# EUROPÄISCHE PATENTSCHRIFT

(11) **EP 4 627 227 B1**
(45) Veröffentlichungstag und Bekanntmachung des Hinweises auf die Patenterteilung: **08.07.2026**
(21) Anmeldenummer: 23813362.3
(22) Anmeldetag: 24.11.2023
(51) Int. Cl.: F16C 1/12

(54) **VERFAHREN ZUR FÜHRUNG EINER BOWDENZUGSTECKVERBINDUNG ZU EINER ENDLAGE IN EINEM KRAFTFAHRZEUGBAUTEIL EINES KRAFTFAHRZEUGS, FÜHRUNGSSYSTEM ZUM FÜHREN EINER BOWDENZUGSTECKVERBINDUNG ZU EINER ENDLAGE IN EINEM KRAFTFAHRZEUGBAUTEIL EINES KRAFTFAHRZEUGS SOWIE BOWDENZUGSSYSTEM FÜR EIN KRAFTFAHRZEUGBAUTEIL EINES KRAFTFAHRZEUGS**
METHOD FOR GUIDING A BOWDEN CABLE PLUG CONNECTION TO AN END POSITION IN A MOTOR VEHICLE COMPONENT, GUIDE SYSTEM FOR GUIDING A BOWDEN CABLE CONNECTION TO AN END POSITION IN A MOTOR VEHICLE COMPONENT OF A MOTOR VEHICLE AND BOWDEN CABLE SYSTEM FOR A MOTOR VEHICLE COMPONENT OF A MOTOR VEHICLE
PROCÉDÉ DE GUIDAGE D'UNE CONNEXION PAR CÂBLE BOWDEN VERS UNE POSITION D'EXTRÉMITÉ DANS UN COMPOSANT D'UN VÉHICULE AUTOMOBILE, SYSTÈME DE GUIDAGE POUR GUIDER UNE CONNEXION PAR CÂBLE BOWDEN VERS UNE POSITION D'EXTRÉMITÉ DANS UN COMPOSANT DE VÉHICULE AUTOMOBILE ET SYSTÈME DE CÂBLE BOWDEN POUR UN COMPOSANT D'UN VÉHICULE AUTOMOBILE

(30) Priorität: 01.12.2022 DE 102022212977
(43) Veröffentlichungstag der Anmeldung: 08.10.2025
(73) Patentinhaber: VOLKSWAGEN AKTIENGESELLSCHAFT, 38440 Wolfsburg (DE)
(72) Erfinder: DISSELKAMP, Martin, 49124 Georgsmarienhütte (DE); FISCHER, Dirk, 38444 Wolfsburg (DE); KAVEMANN, Heymo, 38446 Wolfsburg (DE); LANGE, Norman, 17033 Neubrandenburg (DE); WITZKE, Herbert, 38442 Wolfsburg (DE)
(86) Internationale Anmeldenummer: PCT/EP2023/083015
(87) Internationale Veröffentlichungsnummer: WO 2024/115321

(56) Entgegenhaltungen:
- WO-A1-96/00339
- US-A1- 2004 163 487
- US-A1- 2019 226 518

## Beschreibung

Die Erfindung betrifft allgemein das Gebiet der Montage von Bowdenzugsteckverbindungen in Kraftfahrzeugen. Im Speziellen betrifft die Erfindung ein Verfahren zur Führung einer Bowdenzugsteckverbindung zu einer Endlage in einem Kraftfahrzeugbauteil eines Kraftfahrzeugs, ein Führungssystem zum Führen einer Bowdenzugsteckverbindung zu einer Endlage in einem Kraftfahrzeugbauteil eines Kraftfahrzeugs sowie ein Bowdenzugssystem für ein Kraftfahrzeugbauteil eines Kraftfahrzeugs.

Bowdenzüge können dazu dienen, die Kraft von einer Türinnenbetätigung, wie etwa eine Türinnenbetätigung eines Kraftfahrzeugs, zum Türschloss zu übertragen. Der Bereich der Türinnenbetätigung kann jedoch bei der Montage des Bowdenzugs für die Fachkraft nicht sichtbar sein. Die Fachkraft muss daher in der Regel den Bowdenzug blind anbringen. Das blinde Anbringen des Bowdenzugs in bzw. an eine Türinnenbetätigung kann sich als schwierig erweisen. Eine Blindmontage kann in der Regel viel Zeit in Anspruch nehmen und erfordert eine hohe Geschicklichkeit der Fachkraft.

Die US 2019 / 226 518 A1 offenbart ein Bowden-Kabelendstück, die US 2004 / 163 487 A1 offenbart ein Verfahren zum lösbaren Befestigen einer Kofferraumdeckelentriegelung und eine Anordnung dafür, sowie die WO 96 / 00339 A1 eine Vorrichtung zur Fernsteuerung eines dreistufigen Positioniermechanismus. US 2018 / 226 518 A1 offenbart ein System gemäß dem Oberbegriff von Anspruch 4.

Es ist Aufgabe der vorliegenden Erfindung, die voranstehend beschriebenen Nachteile beim Anbringen einer Bowdenzugsteckverbindung in einem Kraftfahrzeugbauteil eines Kraftfahrzeugs zumindest teilweise zu beheben. Insbesondere ist es Aufgabe der vorliegenden Erfindung, das Anbringen einer Bowdenzugsteckverbindung bzw. einen Bowdenzug zu einer Endlage in einem Kraftfahrzeugbauteil eines Kraftfahrzeugs zu vereinfachen.

Die voranstehende Aufgabe wird gelöst durch ein Verfahren zur Führung einer Bowdenzugsteckverbindung zu einer Endlage in einem Kraftfahrzeugbauteil eines Kraftfahrzeugs mit den Merkmalen des Anspruchs 1, durch ein Führungssystem zum Führen einer Bowdenzugsteckverbindung zu einer Endlage in einem Kraftfahrzeugbauteil eines Kraftfahrzeugs mit den Merkmalen des Anspruchs 4 sowie durch ein Bowdenzugsystem für ein Kraftfahrzeugbauteil eines Kraftfahrzeugs mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Führungssystem und/oder dem Bowdenzugsystem und jeweils umgekehrt, sodass bezüglich der Offenbarung zu den einzelnen Erfindungsaspekten stets wechselseitig Bezug genommen wird bzw. werden kann.

Mit Ausführungsformen der Erfindung kann in vorteilhafter Weise ein verbessertes Verfahren zur Führung einer Bowdensteckverbindung zu einer Endlage in einem Kraftfahrzeugbauteil eines Kraftfahrzeugs bereitgestellt werden. Mit einem solchen Verfahren kann das Anbringen einer Bowdenzugsteckverbindung in einem Kraftfahrzeugbauteil vereinfacht und präziser durchgeführt werden.

Ein erster Aspekt der vorliegenden Offenbarung betrifft ein Verfahren zur Führung einer Bowdenzugsteckverbindung zu einer Endlage in einem Kraftfahrzeugbauteil eines Kraftfahrzeugs, aufweisend folgende Schritte:
- die Bowdenzugsteckverbindung wird in eine erste Richtung bewegt, bis sie gegen eine Führungsfläche einer Führungsrippe angelehnt wird,
- die Bowdenzugsteckverbindung wird entlang der Führungsrippe in eine zweite Richtung, die sich von der ersten Richtung unterscheidet, bis sie eine Anlagerippe berührt, geführt und wird anschließend entlang einer Anlagefläche der Anlagerippe bis zu einer definierten Endposition geführt, und
- nach Erreichen der Endposition wird die Bowdenzugsteckverbindung bis zur Endlage im Kraftfahrzeugbauteil rotiert.

Mit anderen Worten kann die Bowdenzugsteckverbindung grundsätzlich Anhand von drei Hauptbewegungen in ihre Endlage geführt werden. Die Bowdenzugsteckverbindung kann in die Endlage bzw. ihre Endlage durch Durchführung der Verfahrensschritte montiert werden. Die Endlage der Bowdenzugsteckverbindung kann dabei dahingehend verstanden werden, dass es sich um den montierten Zustand der Bowdenzugsteckverbindung handelt. Die Endlage kann eine Lage oder Position der Bowdenzugsteckverbindung sein, in welcher die Bowdenzugsteckverbindung betriebsbereit ist. In der Endlage kann die Bowdenzugsteckverbindung, insbesondere an einer Türinnenbetätigung eines Kraftfahrzeuges, befestigt sein.

Die Bowdenzugsteckverbindung ist im Kontext der vorliegenden Offenbarung breit zu verstehen. Es kann sich dabei um eine Verbindungsvorrichtung zur Verbindung eines Bowdenzugs mit einem Kraftfahrzeugbauteil handeln. Vorzugsweise ist in der Bowdenzugsteckverbindung bereits der Bowdenzug, bzw. eine Tonne des Bowdenzugs, befestigt. Die Bowdenzugsteckerverbindung kann auch als Bowdenzugendstück, Verbindungsvorrichtung, Bowdenzughaltestruktur oder dergleichen bezeichnet werden.

Eine Bowdenzugsteckverbindung kann grundsätzlich dem Anbringen eines Bowdenzugs in einen Kraftfahrzeugbauteil dienen.

Beim Kraftfahrzeugbauteil kann es sich um eine Innentürbetätigung einer Tür eines Kraftfahrzeugs handeln, wobei die Tür beispielsweise eine Seitentür eines Kraftfahrzeugs oder eine Heckklappe eines Kraftfahrzeugs sein kann.

Die Bowdenzugsteckverbindung kann in einem ersten Verfahrensschritt in eine erste Richtung bewegt werden, bis sie gegen die Führungsfläche der Führungsrippe angelehnt wird. Insbesondere kann die Bowdenzugsteckverbindung translatorisch in eine erste Richtung zur Führungsrippe hinbewegt werden. Beim Bewegen der Bowdenzugsteckverbindung kann eine Längsachse der Bowdenzugsteckverbindung parallel oder im Wesentlichen Parallel zur Führungsfläche der Führungsrippe ausgerichtet sein. Die Bowdenzugsteckverbindung kann als gegen die Führungsfläche der Führungsrippe angelehnt angesehen werden, wenn ein wesentlicher Teil einer Längskante oder eine längliche Seite der Bowdenzugsteckverbindung in Kontakt mit der Führungsrippe ist. Zum Beispiel lehnt die Bowdenzugsteckverbindung gegen die Führungsfläche der Führungsrippe dann an, wenn die Bowdenzugsteckverbindung die Führungsfläche möglichst auf einer Seite, bzw. Länge, der Bowdenzugsteckverbindung berührt.

In der Praxis kann eine Fachkraft feststellen, dass die Bowdenzugsteckverbindung gegen die Führungsfläche der Führungsrippe anlehnt, wenn keine Bewegung in der ersten Richtung mehr möglich ist.

Die erste Richtung kann eine Bewegungsrichtung bezeichnen. Die erste Richtung ist allgemein im Kontext der vorliegenden Offenbarung breit zu verstehen. Die erste Richtung kann mehrere Raumrichtungen umfassen. Der Begriff Raumrichtung entspricht in der Regel einer der drei Richtungen eines 3D-Koordinatensystems, bzw. Bezugssystems. Eine Richtung, hingegen, bezeichnet in der Regel einen Vektor, der sich aus mehreren Komponenten der Raumrichtungen zusammensetzten kann. Die erste Richtung bezeichnet grundsätzlich die Richtung, in welche die Bowdenzugsteckverbindung zur Führungsrippe hinbewegt wird.

In einem zweiten Verfahrensschritt kann die Bowdenzugsteckverbindung entlang der Führungsfläche in einer zweiten Richtung bewegt werden. Der Ausdruck "entlang der Fläche" ist vorliegend breit zu verstehen und kann eine Bewegung bezeichnen, bei welcher die Bowdenzugsteckverbindung in einer der drei Raumrichtungen, vorzugsweise in der Raumrichtung parallel zum Normalvektor der Führungsfläche, nicht bewegt wird. "Entlang der Führungsfläche" kann zudem auch eine Bewegung sein, bei welcher die Bowdenzugsteckverbindung möglichst konstant in Kontakt mit der Führungsfläche bleibt.

Die zweite Richtung unterscheidet sich dabei von der ersten Richtung. Es sei bemerkt, dass die Bezeichnung "erste, zweite, dritte" usw. lediglich zur Unterscheidung der Richtungen dienen soll und keiner festen Reihenfolge oder einem Wichtigkeitsgrad entspricht.

Eine Bewegung in der zweiten Richtung kann in der Regel in zwei Raumrichtungen erfolgen. Die zweite Richtung kann vorzugsweise eine Kombination der zwei Raumrichtungen, die die Ebene der Führungsfläche der Führungsrippe definieren, sein. Die Bowdenzugsteckverbindung kann somit gleichzeitig in zwei Raumrichtungen, welche eine mathematische Ebene parallel zur Führungsfläche bilden, in Richtung der Anlagerippe hinbewegt werden. Die Fachkraft kann bei dieser Bewegung spüren oder feststellen, wenn die Bowdenzugsteckverbindung die Anlagerippe berührt. Die Fachkraft kann die Bowdenzugsteckverbindung weiter in die zweite Richtung führen, nachdem die Bowdenzugsteckverbindung die Anlagerippe berührt hat. Die Fachkraft, bzw. die Bewegung, die die Fachkraft durchführt, kann dabei entsprechend der Anlagefläche geführt werden. Mit anderen Worten kann die Anlagefläche der Anlagerippe die zweite Richtung angeben. Weiter mit anderen Worten kann die Bewegung der Bowdenzugsteckverbindung, bzw. die Richtung, in welche die Bowdenzugsteckverbindung bewegt werden soll, durch die Anlagefläche vorgegeben sein. Die Anlagefläche der Anlagerippe kann die Bowdenzugsteckverbindung bis zu einer Endposition führen.

Der Begriff Endposition ist im Kontext der vorliegenden Offenbarung breit zu verstehen. Die Endposition kann in der Regel das Ende einer Bewegung der Bowdenzugsteckverbindung in einer oder zwei Raumrichtungen bezeichnen. Die Endposition kann eine Position bezeichnen, in welcher keine Bewegung in einer Raumrichtung mehr möglich ist, wobei diese Raumrichtung vorzugsweise senkrecht zum Normalvektor der Führungsfläche sein kann. Die Endposition unterscheidet sich in der Regel von der Endlage der Bowdenzugsteckverbindung.

In der Praxis kann die Fachkraft spüren oder feststellen, dass keine Bewegung in der zweiten Richtung mehr möglich ist. Spürt oder stellt die Fachkraft dies fest, so kann es darauf hindeuten, dass die Bowdenzugsteckverbindung in ihrer Endposition angekommen ist. Die zweite Richtung kann zu einer ersten Anschlagstelle der Bowdenzugsteckverbindung führen. Grundsätzlich soll die Bowdenzugsteckverbindung nach Durchführung des zweiten Verfahrensschritts in ihrer Endposition angekommen sein. Nach Durchführung des zweiten Verfahrensschritts kann die Bowdenzugsteckverbindung die erste Anschlagstelle, bzw. die Endposition, erreicht haben.

In einem weiteren Verfahrensschritt kann die Bowdenzugsteckverbindung rotiert werden. Insbesondere wird die Bowdenzugsteckverbindung um eine Drehachse rotiert, wobei die Drehachse beispielsweise parallel zum Normalvektor der Führungsfläche ist. Die Drehachse der Rotation kann einer Kante der Anlagefläche entsprechen. Dabei kann es sich um die Kante der Anlagefläche handeln, die mit der Bowdenzugsteckverbindung bei der Endposition erreicht wird. Mit anderen Worten kann die Bowdenzugsteckverbindung um ein ihr in der Längsachse angeordnetes Ende rotiert oder geschwenkt werden. Die Drehachse kann parallel zur Breitachse der Bowdenzugsteckverbindung sein. Nach dem Rotieren der Bowdenzugsteckverbindung kann sie die Endlage erreicht haben, d. h., in ihrem montierten Zustand angeordnet sein.

In der Praxis kann die Fachkraft die Bowdenzugsteckverbindung nach oben schieben oder drücken, um diese in ihre Endlage zu bringen, wobei "oben" die dritte Raumrichtung, d. h. die z-Raumrichtung bezeichnen kann. Nachdem die Bowdenzugsteckverbindung in ihrer Endposition an einem ihrer Enden bereits nach dem zweiten Verfahrensschritt festgeklemmt sein kann, kann das Schieben nach oben eine Schwenkung oder Drehung auslösen oder diesen entsprechen. Nach Durchführung des dritten Verfahrensschritts kann die Bowdenzugsteckverbindung eine zweite Anschlagstelle bzw. die Endlage erreicht haben.

Es sei bemerkt, dass zwei Verfahrensschritte, insbesondere der erste und der zweite Verfahrensschritt, gleichzeitig von der Fachkraft durchgeführt werden können. Dadurch können sich zwei Richtungen, etwa die erste und die zweite Richtung, zusammentun, bzw. sich mischen.

Zusammenfassend können die Führungsrippe und die Anlagerippe die Bewegungen der Fachkraft derart führen, steuern oder leiten, dass die Fachkraft die Bowdenzugsteckverbindung blind anbringen kann und sich nur auf Anschlagstelle(n) bei den jeweiligen Bewegungen verlassen kann. Die Führungsrippe und die Anlagerippe können Richtungen für das Anbringen der Bowdenzugsteckverbindung vorgeben, sodass das Anbringen der Bowdenzugsteckverbindung hierdurch wesentlich erleichtert werden kann. Dadurch kann eine Fehlplatzierung, bzw. eine fehlerhafte Endlage der Bowdenzugsteckverbindung, vermieden werden.

Durch das Verfahren kann die Bowdenzugsteckverbindung blind an ein Kraftfahrzeugbauteil angebracht werden. Durch das Verfahren kann das Anbringen eines Bowdenzugs, bzw. einer Bowdenzugsteckverbindung an ein Kraftfahrzeugbauteil, wie etwa eine Türinnenbetätigung, vereinfacht und erleichtert werden.

Gemäß einer Ausführungsform weist das Verfahren weiter folgenden Schritt auf:
- die Bowdenzugsteckverbindung wird in der Endlage am Kraftfahrzeugbauteil, insbesondere in eine Einbauvorrichtung einer Türinnenbetätigung einer Tür des Kraftfahrzeugs, eingerastet.

Mit anderen Worten, kann die Bowdenzugsteckverbindung in der Endlage, bzw. in ihrer Endlage, weiter am Kraftfahrzeugbauteil eingerastet werden. Dies kann zum Beispiel dadurch erfolgen, dass die Fachkraft die Bowdenzugsteckverbindung in eine Rastverbindung drückt. Hierfür kann das Kraftfahrzeugbauteil eine Rastverbindung aufweisen. Insbesondere kann eine Haltevorrichtung des Kraftfahrzeugbauteils eine Rastverbindung aufweisen. Die Bowdenzugsteckverbindung kann dabei einen Gegenrast aufweisen. Grundsätzlich kann die Bowdenzugsteckverbindung in der Endlage an dem Kraftfahrzeugbauteil befestigt sein.

Hierdurch kann das Anbringen der Bowdenzugsteckverbindung an dem Kraftfahrzeugteil weiter erleichtert werden.

Alternativ oder zusätzlich zu einer Rastverbindung kann auch eine Klemmverbindung vorgesehen sein.

Gemäß einer Ausführungsform des Verfahrens wird die Bowdenzugsteckverbindung in der Endposition an einer Anschlagsfläche rotierbar gehalten.

Mit anderen Worten können die Anlagerippe und die Führungsrippe derart ausgebildet sein, dass in der Endposition die Bowdenzugsteckverbindung nur noch einen Freiheitsgrad, nämlich das Rotieren, aufweist. Die Anschlagsfläche kann vorzugsweise formschlüssig mit einer Endkante der Bowdenzugsteckverbindung, insbesondere einer Endkante einer Breitseite der Bowdenzugsteckverbindung, ausgebildet sein. In der Endposition kann die Bowdenzugsteckverbindung, bzw. eine Endkante der Bowdenzugsteckverbindung, an die Anschlagsfläche angelehnt sein.

Die Anschlagsfläche kann in einer Ebene, die im Wesentlichen Parallel zum Normalvektor der Führungsfläche ist, angeordnet sein. Die Anschlagsfläche soll eine erste Anschlagstelle beim Montieren der Bowdenzugsteckverbindung anbieten und vorzugsweise eine Bewegung der Bowdenzugsteckverbindung in einer Raumrichtung vermeiden. Die Anschlagsfläche kann Teil einer Einbauvorrichtung des Kraftfahrzeugbauteils sein. Die Einbauvorrichtung kann beispielsweise ein Mundstück, welches als Anschlagsfläche dient, aufweisen.

Ein zweiter Aspekt der vorliegenden Offenbarung betrifft ein Führungssystem zum Führen einer Bowdenzugsteckverbindung zu einer Endlage in einem Kraftfahrzeugbauteil eines Kraftfahrzeugs. Das Führungssystem weist eine Anlagerippe und eine Führungsrippe auf. Die Anlagerippe weist wiederum eine Anlagefläche auf, welche zumindest abschnittsweise mit einem Winkel α zu einer vertikalen Achse gerichtet ist. Die Führungsrippe weist eine Führungsfläche auf, die senkrecht oder im Wesentlichen senkrecht zur Anlagefläche der Anlagerippe ausgerichtet ist.

Mit anderen Worten können zwei Rippen bereitgestellt werden, die jeweils eine Fläche aufweisen, wobei die jeweiligen Flächen derart ausgebildet sind, dass sie das Anbringen einer Bowdenzugsteckverbindung in einem Kraftfahrzeugbauteil führen, steuern oder leiten können. Die Anlagefläche und die Führungsfläche können Wegstütze für das Führen der Bowdenzugsteckverbindung bis zur Endlage in einem Kraftfahrzeugbauteil anbieten.

Es sei bemerkt, dass im Kontext der vorliegenden Offenbarung zwei Flächen im Wesentlichen senkrecht zueinander sind, wenn sie mit einer Abweichung von 5%, von 10% oder von 15% senkrecht zueinander sind.

Die Führungsfläche der Führungsrippe kann innerhalb einer Ebene, gebildet durch die Raumrichtungen z und x, angeordnet sein, wobei x und z Raumrichtungen eines x-y-z-Koordinatensystems sind. Die Führungsfläche kann rechteckig ausgebildet sein. Die Führungsfläche kann eine Dicke in der Raumrichtung y aufweisen, die 8-fach, 10-fach oder 15-fach kleiner ist, als die Dimension der Führungsfläche sowohl in x- als auch in z-Raumrichtung.

Die Anlagefläche der Anlagerippe kann dabei zumindest abschnittsweise innerhalb einer Ebene, gebildet durch die Raumrichtungen z und y, angeordnet werden. Die Anlagefläche, die eine Ebene in die Raumrichtungen z und y bilden kann, ist vorzugsweise relativ zur vertikalen Achse geneigt, insbesondere um einen Winkel α geneigt. Es sei bemerkt, dass die vertikale Achse die Raumrichtung z bezeichnen kann.

Die Anlagerippe kann teilweise die Führungsfläche überlappen, sodass von einer Betrachtungsweise in der y-Raumrichtung ein Teil der Führungsfläche von der Anlagerippe bedeckt ist.

Der Abschnitt der Anlagefläche, welcher mit einem Winkel α geneigt ist, kann vorzugsweise einer Anschlagsfläche benachbart sein. In einem z,x-Schnitt, bzw. einer Ebene, kann die Anlagerippe das Profil eines kantigen Halbkreises, d. h., eines halben Achtecks oder eines halben Sechsecks, oder eines runden Halbkreises aufweisen. Bei einem kantigen Halbkreisprofil kann die Anlagefläche drei, vier oder mehr Abschnitte aufweisen. Die Anlagerippe kann in y-Raumrichtung eine Dicke haben. Die Bowdenzugsteckverbindung kann entlang des Profils der Anlagerippe geführt werden. Die Neigung zumindest eines Abschnitts kann das Anbringen der Bowdenzugsteckverbindung weiter erleichtern.

Die Führungsrippe und die Anlagerippe können einteilig ausgebildet sein.

Zudem ist es denkbar, dass die Anlagerippe und/oder die Führungsfläche oder die jeweilige Fläche hiervon mit einem elastischen Material beschichtet sind. Mit anderen Worten kann die Anlagefläche und/oder die Führungsfläche eine Beschichtung aufweisen, die dämpfend ausgebildet sein kann. Hierdurch kann das Anbringen der Bowdenzugsteckverbindung derart verbessert werden, dass die Haptik für die Fachkraft das Führen der Bowdenzugsteckverbindung vereinfacht. So kann die Fachkraft beispielsweise besser spüren ab wann die Bowdenzugsteckverbindung die Führungsrippe und/oder die Anlagefläche berührt. Des Weiteren ist es auch denkbar, dass die Anlagefläche unterschiedliche Beschichtungen aufweist, die der Fachkraft ermöglichen, durch die unterschiedlichen Haptik der Abschnitte blind zu erkennen, um welchen Abschnitt der Anlagefläche es sich handelt. So kann beispielsweise lediglich ein Abschnitt der Anlagefläche mit einer Beschichtung versehen sein, wobei die restlichen Abschnitte der Anlagefläche keine Beschichtungen aufweisen.

Durch das Führungssystem kann in vorteilhafter Weise eine Bowdenzugsteckverbindung in einem Kraftfahrzeugbauteil angebracht werden. Durch das Führungssystem kann das Anbringen einer Bowdenzugsteckverbindung, insbesondere eines Bowdenzugs, in oder an einem Kraftfahrzeugbauteil wie etwa eine Türinnenbetätigung erleichtert werden. Ein solches Führungssystem kann das Blindanbringen einer Bowdenzugsteckverbindung ermöglichen.

Gemäß einer Ausführungsform des Führungssystems sind die Anlagerippe und die Führungsrippe zweiteilig ausgebildet.

Gemäß einer Ausführungsform des Führungssystems sind in der Normalrichtung der Führungsfläche die Anlagerippe und die Führungsrippe voneinander um einen definierten Abstand (d) beabstandet.

Die Bowdenzugsteckverbindung kann an einem ihrer Ende einen Bügel und zwei Schenkel aufweisen, wobei der Bügel in der Endlage in Kontakt mit der Anschlagsfläche angeordnet ist. Der Abstand d kann derart ausgewählt sein, dass ein Schenkel zumindest in der Endposition zwischen den zwei Rippen, bzw. in der Lücke der Breite d, reinpassen kann. Der Bügel der Bowdenzugsteckverbindung kann eine Anschlagkante aufweisen.

Alternativ ist es denkbar, dass die Anlagerippe und die Führungsrippe einteilig ausgebildet sind und zwischen diesen eine Nute der Breite d ausgebildet ist.

Gemäß einer Ausführungsform des Führungssystems ist die Anlagefläche der Anlagerippe eben und/oder gewölbt ausgebildet. Alternativ oder zusätzlich ist die Führungsfläche der Führungsrippe eben ausgebildet.

Im Kontext der vorliegenden Offenbarung ist der Begriff "gewölbt" breit zu verstehen. Die Anlagefläche kann dabei eine in x,y-Richtung ausgerichtete Ebene, die in x-Richtung gewölbt sein kann, sein. Im Allgemeinen kann die Wölbung der Anlagefläche derart ausgebildet sein, dass die Bowdenzugsteckverbindung entlang der Wölbung geführt werden kann.

Der Begriff "eben" ist ebenso vorliegend breit zu verstehen. Dabei soll der Begriff "eben" sich in der Regel auf die Geometrie der Führungsrippe und nicht auf dessen Oberflächenstruktur beziehen. Grundsätzlich kann eine ebene Führungsfläche dahingehend verstanden werden, dass die Breite der Führungsrippe im Wesentlichen konstant ist. "Im Wesentlichen" kann allgemein leichte Abweichungen umfassen. Zum Beispiel ist eine Dicke im Wesentlichen konstant, wenn sie Konstant mit Abweichungen im Bereich von 2%, im Bereich von 5% oder im Bereich von 10% aufweist.

Gemäß einer Ausführungsform weist das Führungssystem weiter eine Haltervorrichtung auf. Die Haltevorrichtung ist derart ausgebildet, dass die Bowdenzugsteckverbindung in einer Endposition rotierbar befestigt ist.

Bei der Haltevorrichtung kann es sich um die Einbauvorrichtung des Kraftfahrzeugbauteils oder um einen Teil, ein Element oder eine Komponente der Einbauvorrichtung des Kraftfahrzeugbauteils handeln. Die Haltevorrichtung kann eine Anschlagsfläche aufweisen, an welcher die Bowdenzugsteckverbindung rotierbar gehalten sein kann.

Gemäß einer Ausführungsform des Führungssystems ist die Anlagefläche der Anlagerippe parallel zur Führungsfläche geneigt und/oder abgerundet.

Mit anderen Worten kann die Neigungsrichtung der Anlagefläche in einer Ebene parallel zur Führungsfläche sein. Dadurch kann das Führen der Bowdenzugsteckverbindung entlang der Anlagefläche erleichtert werden.

Ein dritter Aspekt der vorliegenden Offenbarung betrifft ein Bowdenzugsystem für ein Kraftfahrzeugbauteil eines Kraftfahrzeugs aufweisend ein Führungssystem wie voranstehend und nachfolgend beschrieben und eine Bowdenzugsteckverbindung. Die Bowdenzugsteckverbindung ist mithilfe des Führungssystems in die Türinnenbetätigung montierbar. Zudem liegt eine Seite der Bowdenzugsteckerverbindung, insbesondere eine Längsseite der Bowdenzugsteckverbindung, in der Endlage in einem Kraftfahrzeugbauteil eines Kraftfahrzeugs an einer Führungsfläche der Führungsrippe des Führungssystems formschlüssig an.

Die Bowdenzugsteckverbindung kann dabei eine längliche Struktur mit einer Bowdenzugaufnahme aufweisen. Die Bowdenzugaufnahme kann zur Aufnahme einer Hülle eines Bowdenzugs sowie zur Durchführung einer Seele des Bowdenzugs ausgebildet sein. Die Bowdenzugsteckverbindung kann weiter eine Tonnenführung für die Führung einer Tonne des Bowdenzugs aufweisen. Die längliche Struktur kann zwei Schenkel und einen Bügel aufweisen, wobei der Bügel in einer Endposition an einer Anschlagsfläche angelehnt sein kann. Dabei kann der Bügel eine Anschlagkante aufweisen. Eine Längsseite der länglichen Struktur der Bowdenzugsteckerverbindung kann in der Endlage derart angeordnet sein, dass sie in Kontakt mit der Führungsfläche ist. Die Bowdenzugsteckverbindung ist in der Regel derart ausgebildet, dass sie mit dem Führungssystem kompatibel ist. Der Begriff "kompatibel" kann dahingehend verstanden werden, dass die Bowdenzugsteckverbindung strukturell derart ausgebildet ist, dass sie mittels dem Führungssystem in der Endlage in vorteilhafter Weise geführt werden kann.

Mit einem solchen Bowdenzugsystem kann in vorteilhafter Weise die Bowdenzugsteckverbindung des Bowdenzugsystems blind an einem Kraftfahrzeugbauteil angebracht werden. Durch das Bowdenzugsystem kann das Anbringen eines Bowdenzugs, bzw. einer Bowdenzugsteckverbindung an einen Kraftfahrzeugbauteil, wie etwa eine Türinnenbetätigung, vereinfacht und erleichtert werden.

Sämtliche Offenbarungen, welche voranstehend und nachfolgend in Bezug auf einen Aspekt der vorliegenden Offenbarung beschrieben sind, gelten gleichermaßen für alle weiteren Aspekte der vorliegenden Offenbarung.

Im Folgenden werden Ausführungsbeispiele der Erfindung unter Bezugnahme auf die Figuren beschrieben.
- Figur 1: zeigt schematisch ein Führungssystem gemäß einem Ausführungsbeispiel,
- Figur 2: zeigt schematisch ein Führungssystem gemäß einem Ausführungsbeispiel,
- Figur 3: zeigt schematisch ein Bowdenzugssystem gemäß einem Ausführungsbeispiel,
- Figur 4: zeigt schematisch eine Bowdenzugsteckverbindung gemäß einem Ausführungsbeispiel, und
- Figur 5: zeigt ein Flussdiagram eines Verfahrens gemäß einem Ausführungsbeispiel.

Ähnliche, ähnlich wirkende, gleiche oder gleich wirkende Elemente sind in den Figuren mit ähnlichen oder gleichen Bezugszeichen versehen. Die Figuren sind lediglich schematisch und nicht maßstabsgetreu.

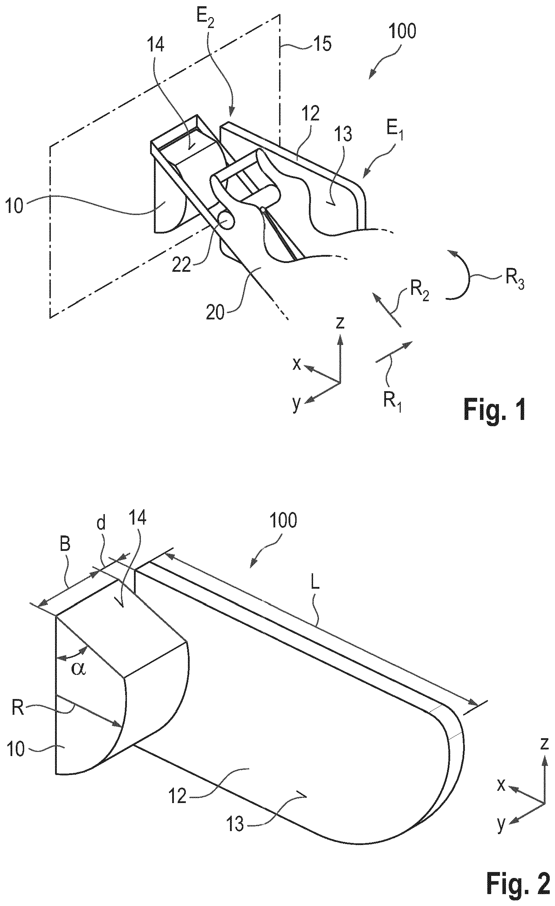

Fig. 1 zeigt ein Führungssystem 100 gemäß einer Ausführungsform. Das Führungssystem 100 der Fig. 1 ist zum Führen einer Bowdenzugsteckverbindung 20 zu einer Endlage in einem Kraftfahrzeugbauteil eines Kraftfahrzeugs ausgebildet. Das Führungssystem 100 weist eine Anlagerippe 10 mit einer Anlagefläche 14 und eine Führungsrippe 12 mit einer Führungsfläche 13. Im Führungssystem 100 der Fig. 1 wird gerade eine Bowdenzugsteckverbindung 20 angebracht, bzw. geführt. Die Bowdenzugsteckverbindung 20 ist in diesem Fall an einer Anlagefläche 14 der Anlagerippe 10 angelehnt und seitlich an einer Führungsfläche 13 der Führungsrippe 12 ebenso angelehnt.

In Fig.1 ist auch ein Koordinatensystem dargestellt, auf welches sich die Beschreibung der vorliegenden Erfindung bezieht.

In Fig. 1 sind auch drei Richtungen R1, R2, und R3 schematisch in perspektiver Ansicht dargestellt. Die Richtung R2 kann als Vektor mit einer Komponente in x-Raumrichtung und einer Komponente in z-Raumrichtung angesehen werden. Die Richtung R1 kann jedoch als Vektor mit einer einzigen Komponente, nämlich in y-Raumrichtung, angesehen werden. Die Richtung R3 stellt eine Rotation oder eine Schwenkung dar.

Die Anlagerippe 10 und die Führungsfläche 13 können an einem zweiten Ende E2 in x-Raumrichtung ausgerichtet sein. Der Bowdenzug 22 kann sich vom ersten Ende E1 der Führungsrippe 12 erstrecken.

Die Anlagefläche 14 der Anlagerippe 10 ist zumindest abschnittsweise mit einem Winkel α (vgl. Fig. 2) zu einer vertikalen Achse z gerichtet. Die Führungsfläche 13 ist in der Regel senkrecht oder im Wesentlichen senkrecht zur Anlagefläche 14 der Anlagerippe 10 ausgerichtet. Mit anderen Worten ist die Führungsfläche 13 im Wesentlichen in einer x,z-Ebene ausgebildet, während die Anlagefläche 14 im Wesentlichen in der z,y-Ebene mit einer Neigung in z-Raumrichtung ausgebildet ist.

Fig. 2 zeigt ein Führungssystem 100 gemäß einer Ausführungsform. Sofern nicht anders beschrieben, weist das Führungssystem 100 der Fig. 2 dieselben Elemente und/oder Komponenten wie das Führungssystem 100 der Fig. 1 auf. Die Anlagerippe 10 des Führungssystems 100 der Fig. 2 weist eine gewölbte Anlagefläche 14 auf, welche im Wesentlichen einen Halbkreis oder ein halbes Achteck bildet. Ein solcher Halbkreis oder ein solches Achteck hat einen Radius R. Die Anlagefläche 14 der Anlagerippe 10 weist eine Breite B auf. Die Breite B kann 3-fach, 5-fach oder 10-fach größer sein als die Dicke der Führungsrippe 12, wobei die Dicke der Führungsrippe 12 die Länge der Führungsrippe 12 in y-Raumrichtung bezeichnet.

In Fig. 2 ist die Bowdenzugsteckverbindung 20 nicht oder noch nicht montiert. Die zwei Rippen spannen zusammen einen dreidimensionalen Raum. In diesem Raum kann die Bowdenzugsteckverbindung 20 angebracht und derart bewegt werden, bis sie zur Endlage geführt wird. Es sei bemerkt, dass die Breite B der Anlagerippe 10 und somit der Anlagefläche 14 nicht zwangsläufig die gleiche Breite der Bowdenzugsteckverbindung 20 sein muss. Es ist denkbar, dass die Breite B der Anlagerippe 10 kleiner, insbesondere um das 2-Fache, oder das 3-Fache oder das 4-Fache kleiner ist als die Breite der Bowdenzugsteckverbindung 20. Die Breite der Bowdenzugsteckverbindung 20 bezeichnet in der Regel die Länge in y-Raumrichtung der länglichen Struktur der Bowdenzugsteckverbindung 20.

Die Führungsrippe 12 der Fig. 2 ist vorwiegend rechteckig ausgebildet und weist eine Länge L auf, die ca. dreimal so groß ist wie die Breite B der Anlagerippe 10. Es kann sich für eine verbesserte Führung der Bowdenzugsteckverbindung 20 durch die Führungsrippe 12 als vorteilhaft erweisen, dass die Länge L der Führungsrippe 12 zumindest so groß ist wie ca. 2/3 der Länge der Bowdenzugsteckverbindung 20 oder der länglichen Struktur der Bowdenzugsteckverbindung 20.

Des Weiteren sei es denkbar, dass die Führungsrippe 12 und/oder die Anlagerippe 10 mit einem dämpfenden Material, wie etwa einem elastischen Material, beschichtet sein können. Durch eine solche Beschichtung der Führungsrippe 12 und/oder der Anlagerippe 10 und insbesondere der Führungsfläche 13 und der Anlagefläche 14 kann die Haptik beim Führen der Bowdenzugsteckverbindung 20 in die Endlage des Kraftfahrzeugbauteils für die Fachkraft verbessert werden. In der Praxis könnte hierdurch die Fachkraft besser spüren ab wann die Bowdenzugsteckverbindung 20 die Führungsfläche 13 und/oder die Anlagefläche 14 berührt.

Zudem könnte eine solche Beschichtung bei einer hektischen oder brüsken Bewegung, sei es zum Beispiel die erste oder die zweite Bewegung des Verfahrens zum Führen der Bowdenzugsteckverbindung 20 in die Endlage in einem Kraftfahrzeugbauteil eines Kraftfahrzeugs, eine Beschädigung an der Bowdenzugsteckverbindung 20 und/oder an einer der zwei Flächen 13, 14 vermieden werden.

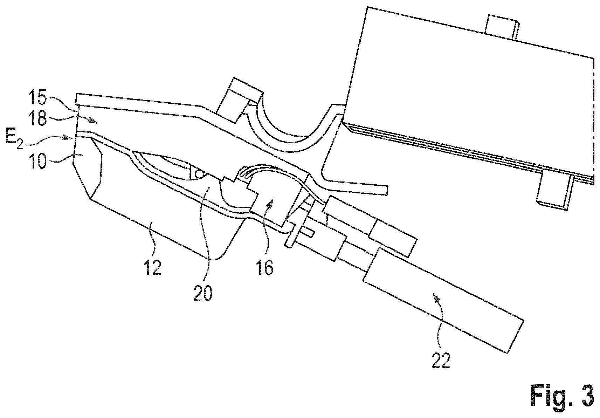

Fig. 3 zeigt schematisch ein Bowdenzugsystem. Insbesondere zeigt Fig. 3 schematisch ein Bowdenzugsystem, in welchem die Bowdenzugsteckverbindung 20 in der Endlage ist. Das Bowdenzugsystem umfasst eine Bowdenzugsteckverbindung 20 und ein Führungssystem 100. Sofern nicht anders beschreiben, weist das Führungssystem 100 der Fig. 3 dieselben Elemente und/oder Komponenten wie das Führungssystem 100 der Fig. 1 und 2 auf. Die Bowdenzugsteckverbindung 20 der Fig. 3 ist zumindest zum Teil mittels einer Rastverbindung 16 einer Einbauvorrichtung 18 an dem Fahrzeugbauteil befestigt. Die Einbauvorrichtung 18 der Fig. 3 weist zudem eine Anschlagsfläche 15, welche in Form eines Mundstücks oder eines Schnabels ausgebildet ist. Die Bowdenzugsteckverbindung 20 kann somit am zweiten Ende der Führungsrippe E2 zwischen der Anlagerippe 10 und der Einbauvorrichtung 18 geklemmt sein. Eine Anschlagkante 30 der länglichen Struktur der Bowdenzugsteckverbindung 20 kann dabei in Berührung mit der Anschlagsfläche 15 der Einbauvorrichtung 18 sein.

Die Anlagerippe 10 der Fig. 3 weist eine Anlagefläche 14 mit vier Abschnitten auf, wobei der erste Abschnitt der unterste ist, d. h., der am weitesten Entfernte von der Einbauvorrichtung 18, und der letzte Abschnitt der Anlagefläche 14 der oberste ist, d. h., der Nächstgelegene zur Einbauvorrichtung 18. Der letzte Abschnitt der Anlagefläche 14 ist mehr oder weniger senkrecht zur vertikalen Achse, sodass in der Endlage die Bowdenzugsteckverbindung 20 zwischen Einbauvorrichtung 18 und Anlagerippe 10 eingeklemmt sein kann. Der vorletzte Abschnitt der Anlagefläche 14 ist in der Fig. 3 mit einem Winkel α von ca. 50° oder ca. 60° oder ca. 70° zur vertikalen Achse, d. h., zur z-Raumrichtung, geneigt.

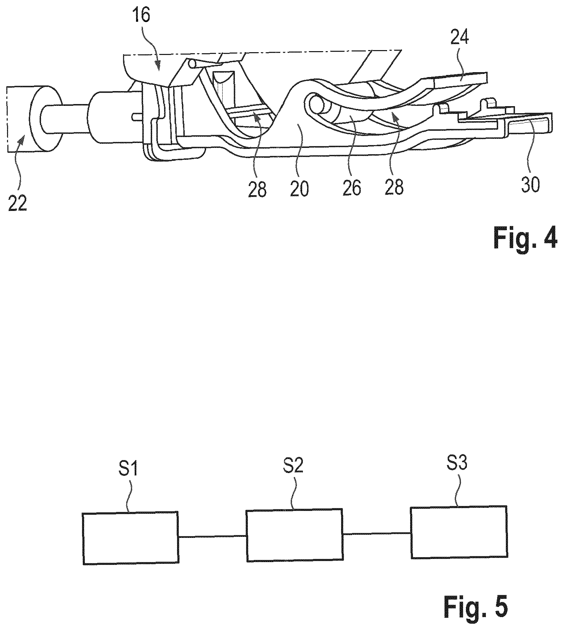

Fig. 4 zeigt schematisch eine Bowdenzugsteckverbindung 20. Insbesondere zeigt Fig. 4 schematisch eine Bowdenzugsteckverbindung 20 in der Endlage, wobei die Führungsrippe 12 und die Anlagerippe 10 ausgeblendet worden sind. Sofern nicht anders beschreiben, weist die Bowdenzugsteckverbindung 20 der Fig. 4 dieselben Elemente und/oder Komponenten wie die Bowdenzugsteckverbindung 20 der Fig. 1 und 3 auf.

Die Bowdenzugsteckverbindung 20 ist an einer Rastverbindung 16 der Einbauvorrichtung 18 des Kraftfahrzeugbauteils befestigt. Die Bowdenzugsteckverbindung 20 weist hierfür eine Gegenrast 24 auf. Beim Anbringen der Bowdenzugsteckverbindung 20 an dem Kraftfahrzeugbauteil ist der Bowdenzug 22 bereits an der Bowdenzugsteckverbindung 20 angebracht worden. In der Tonnenführung 28 der Bowdenzugsteckverbindung 20 ist die Tonne 26 des Bowdenzugs 22 angeordnet. In Fig. 4 ist weiter die Tonnenführung 28 ersichtlich. Die Bowdenzugsteckverbindung 20 weist eine längliche Struktur auf, die an einem ihrer Enden, welches zum zweiten Ende E2 der Führungsrippe 12 korrespondiert, einen Bügel mit einer Anschlagkante 30 aufweist. Der Bügel ist zwischen zwei Schenkeln angeordnet, wobei die zwei Schenkel in z-Raumrichtung in der Regel größer sind als der Bügel. Die Anschlagkante 30 kann die Kante einer Bügelfläche sein. Die Bügelfläche kann an der Anlagefläche 14 der Anlagerippe 10 in der Endlage angelehnt sein.

Allgemein sei bemerkt, dass die Bowdenzugsteckverbindung 20 derart ausgebildet ist, dass diese kompatibel mit dem Führungssystem 100 ist. Mit anderen Worten ist die Bowdenzugsteckverbindung 20 derart ausgebildet, dass sie zum einen mit dem Führungssystem 100 in die Endlage geführt werden kann und zum anderen, dass sie in der Endlage robust und stabil zum Teil mittels dem Führungssystem 100 befestigt werden kann.

Fig. 5 zeigt ein Flussdiagram eines Verfahrens gemäß einem Ausführungsbeispiel. Das Verfahren ist zur Führung einer Bowdenzugsteckverbindung 20 zu einer Endlage in einem Kraftfahrzeugbauteil eines Kraftfahrzeugs geeignet und/oder eingerichtet. In einem ersten Verfahrensschritt S1 wird die Bowdenzugsteckverbindung 20 in eine erste Richtung R1 (vgl. Fig. 1) bewegt, bis sie gegen eine Führungsfläche 13 einer Führungsrippe 12 angelehnt wird. In einem zweiten Verfahrensschritt S2, welcher gleichzeitig mit dem ersten Verfahrensschritt S1 wird die Bowdenzugsteckverbindung 20 entlang der Führungsrippe 12 in eine zweite Richtung R2 (vgl. Fig. 1), die sich von der ersten Richtung R1 unterscheidet, bis sie eine Anlagerippe 10 berührt, geführt. Weiter im zweiten Verfahrensschritt S2 wird die Bowdenzugsteckverbindung 20 anschließend entlang einer Anlagefläche 14 der Anlagerippe 10 bis zu einer definierten Endposition geführt. Schließlich in einem dritten Verfahrensschritt S3 wird die Bowdenzugsteckverbindung 20 nach Erreichen der Endposition bis zur Endlage im Kraftfahrzeugbauteil rotiert R3 (vgl. Fig. 1).

In einem optionalen weiteren Verfahrensschritt (nicht gezeigt) kann die Bowdenzugsteckverbindung 20 in der Endlage am Kraftfahrzeugbauteil, insbesondere in eine Einbauvorrichtung 18 einer Türinnenbetätigung einer Tür des Kraftfahrzeugs, eingerastet werden.

Ergänzend sei darauf hingewiesen, dass die Begriffe "umfassend" und "aufweisend" keine anderen Elemente ausschließen und die unbestimmten Artikel "eine" oder "ein" keine Vielzahl ausschließen. Ferner sei darauf hingewiesen, dass Merkmale und Schritte, die mit Verweis auf eines der obigen Ausführungsbeispiele beschrieben worden sind, auch in Kombination mit anderen Merkmalen und Schritten anderer oben beschriebener Ausführungsbeispiele verwendet werden können im Rahmen der beigefügten Ansprüche.

### Bezugszeichenliste

- 100: Führungssystem
- 10: Anlagerippe
- 12: Führungsrippe
- 13: Führungsfläche
- 14: Anlagefläche
- 15: Anschlagsfläche
- 16: Rastverbindung
- 18: Einbauvorrichtung
- 20: Bowdenzugsteckverbindung
- 22: Bowdenzug
- 24: Gegenrast
- 26: Tonne
- 28: Tonnenführung
- 30: Anschlagkante

- R1: erste Richtung
- R2: zweite Richtung
- R3: Rotation
- E1: erstes Ende der Führungsrippe
- E2: zweites Ende der Führungsrippe

- x: erste Raumrichtung
- y: zweite Raumrichtung
- z: vertikale Raumrichtung

- B: Breite der Anlagerippe
- d: definierter Abstand
- L: Länge der Führungsrippe
- α: Winkel zur vertikalen Achse
- R: Radius der Anlagerippe

- S1: erster Verfahrensschritt
- S2: zweiter Verfahrensschritt
- S3: dritter Verfahrensschritt

## Patentansprüche

1. Verfahren zur Führung einer Bowdenzugsteckverbindung (20) zu einer Endlage in einem Kraftfahrzeugbauteil eines Kraftfahrzeug mittels eines Führungssystems nach Anspruch 4, aufweisend folgende Schritte:
(S1) die Bowdenzugsteckverbindung (20) wird in eine erste Richtung (R1) bewegt, bis sie gegen eine Führungsfläche (13) einer Führungsrippe (12) angelehnt wird;
(S2) die Bowdenzugsteckverbindung (20) wird entlang der Führungsrippe (12) in eine zweite Richtung (R2), die sich von der ersten Richtung (R1) unterscheidet, bis sie eine Anlagerippe (10) berührt, geführt und wird anschließend entlang einer Anlagefläche (14) der Anlagerippe (10) bis zu einer definierten Endposition geführt; und
(S3) nach Erreichen der Endposition wird die Bowdenzugsteckverbindung (20) bis zur Endlage im Kraftfahrzeugbauteil rotiert (R3).

2. Verfahren nach Anspruch 1, weiter aufweisend folgenden Schritt:
(S4) die Bowdenzugsteckverbindung (20) wird in der Endlage am Kraftfahrzeugbauteil, insbesondere in eine Einbauvorrichtung (18) einer Türinnenbetätigung einer Tür des Kraftfahrzeugs, eingerastet.

3. Verfahren nach einem der Ansprüche 1 und 2,
wobei die Bowdenzugsteckverbindung (20) in der Endposition an einer Anschlagsfläche (15) rotierbar gehalten wird.

4. Führungssystem (100) zum Führen einer Bowdenzugsteckverbindung (20) zu einer Endlage in einem Kraftfahrzeugbauteil eines Kraftfahrzeugs, aufweisend
eine Anlagerippe (10) und eine Führungsrippe (12),
wobei die Anlagerippe (10) eine Anlagefläche (14) aufweist, welche zumindest abschnittsweise mit einem Winkel (α) zu einer vertikalen Achse gerichtet ist, **dadurch gekennzeichnet, dass**
die Führungsrippe 12 eine Führungsfläche (13) aufweist, die senkrecht oder im Wesentlichen senkrecht zur Anlagefläche (14) der Anlagerippe (10) ausgerichtet ist.

5. Führungssystem (100) nach Anspruch 4,
wobei die Anlagerippe (10) und die Führungsrippe (12) zweiteilig ausgebildet sind.

6. Führungssystem (100) nach einem der Ansprüche 4 oder 5,
wobei in der Normalrichtung der Führungsfläche (13) die Anlagerippe (10) und die Führungsrippe (12) voneinander um einen definierten Abstand (d) beabstandet sind.

7. Führungssystem (100) nach einem der Ansprüche 4 bis 6,
wobei die Anlagefläche (14) der Anlagerippe (10) eben und/oder gewölbt ausgebildet ist, und/oder
wobei die Führungsfläche (13) der Führungsrippe (12) eben ausgebildet ist.

8. Führungssystem (100) nach einem der Ansprüche 4 bis 7,
weiter aufweisend eine Haltervorrichtung, die derart ausgebildet ist, dass die Bowdenzugsteckverbindung (20) in einer Endposition rotierbar befestigt ist.

9. Führungssystem (100) nach einem der Ansprüche 4 bis 7,
wobei die Anlagefläche (14) der Anlagerippe (10) parallel zur Führungsfläche (13) geneigt und/oder abgerundet ist.

10. Bowdenzugsystem (200) für ein Kraftfahrzeugbauteil eines Kraftfahrzeugs, aufweisend ein Führungssystem (100) nach einem der Ansprüche 4 bis 9 und eine Bowdenzugsteckverbindung (20),
**dadurch gekennzeichnet,**
**dass** die Bowdenzugsteckverbindung (20) mithilfe des Führungssystems (100) in die Türinnenbetätigung montierbar ist,
wobei eine Seite der Bowdenzugsteckerverbindung (20) in der Endlage in einem Kraftfahrzeugbauteil eines Kraftfahrzeugs an einer Führungsfläche (13) der Führungsrippe (12) des Führungssystems (100) formschlüssig anliegt.

## Claims

1. Method for guiding a Bowden cable plug-in connection (20) to an end state in a motor vehicle component of a motor vehicle by means of a guide system according to claim 4, comprising the following steps:
(S1) the Bowden cable plug-in connection (20) is moved in a first direction (R1) until it rests against a guide face (13) of a guide rib (12);
(S2) the Bowden cable plug-in connection (20) is guided along the guide rib (12) in a second direction (R2), which differs from the first direction (R1), until it touches a bearing rib (10) and is then guided along a bearing face (14) of the bearing rib (10) as far as a defined end position; and
(S3) once the end position is reached, the Bowden cable plug-in connection (20) is rotated as far as the end state in the motor vehicle component (R3).

2. Method according to claim 1, further comprising the following step:
(S4) the Bowden cable plug-in connection (20) is snap-fitted in the end state on the motor vehicle component, in particular into an installation device (18) of an interior door actuation of a door of the motor vehicle.

3. Method according to any of claims 1 or 2,
wherein the Bowden cable plug-in connection (20) is held rotatably in the end position against a stop face (15).

4. Guide system (100) for guiding a Bowden cable plug-in connection (20) to an end state in a motor vehicle component of a motor vehicle, comprising a bearing rib (10) and a guide rib (12),
wherein the bearing rib (10) has a bearing face (14) which is oriented at least in portions at an angle (α) to a vertical axis,
**characterized in that**
the guide rib 12 has a guide face (13) that is oriented perpendicular or substantially perpendicular to the bearing face (14) of the bearing rib (10).

5. Guide system (100) according to claim 4,
wherein the bearing rib (10) and the guide rib (12) are formed in two parts.

6. Guide system (100) according to any of claims 4 or 5,
wherein in the normal direction of the guide face (13) the bearing rib (10) and the guide rib (12) are spaced apart from each other by a defined distance (d).

7. Guide system (100) according to any of claims 4 to 6, wherein the bearing face (14) of the bearing rib (10) is flat and/or curved,
and/or
wherein the guide face (13) of the guide rib (12) is flat.

8. Guide system (100) according to any of claims 4 to 7,
further comprising a holding device which is designed such that the Bowden cable plug-in connection (20) is rotatably fastened in an end position.

9. Guide system (100) according to any of claims 4 to 7,
wherein the bearing face (14) of the bearing rib (10) is inclined and/or rounded parallel to the guide face (13).

10. Bowden cable system (200) for a motor vehicle component of a motor vehicle, comprising a guide system (100) according to any of claims 4 to 9 and a Bowden cable plug-in connection (20),
**characterized in that**
the Bowden cable plug-in connection (20) can be mounted in the interior door actuation using the guide system (100),
wherein one side of the Bowden cable plug connection (20) in the end state in a motor vehicle component of a motor vehicle is positively engaged against a guide face (13) of the guide rib (12) of the guide system (100).

## Revendications

1. Procédé de guidage d'une connexion enfichable par câble Bowden (20) vers une position finale dans un composant de véhicule automobile d'un véhicule automobile par le biais d'un système de guidage selon la revendication 4, présentant les étapes suivantes :
(S1) la connexion enfichable par câble Bowden (20) est déplacée dans une première direction (R1) jusqu'à ce qu'elle s'adosse contre une surface de guidage (13) d'une nervure de guidage (12) ;
(S2) la connexion enfichable par câble Bowden (20) est guidée le long de la nervure de guidage (12) dans une seconde direction (R2), qui diffère de la première direction (R1), jusqu'à ce qu'elle touche une nervure d'appui (10), et est ensuite guidée le long d'une surface d'appui (14) de la nervure d'appui (10) jusqu'à une position finale définie ; et
(S3) après avoir atteint la position finale, la connexion enfichable par câble Bowden (20) est mise en rotation (R3) jusqu'à la position finale dans le composant de véhicule automobile.

2. Procédé selon la revendication 1, présentant en outre l'étape suivante :
(S4) la connexion enfichable par câble Bowden (20) est encliquetée dans la position finale sur le composant de véhicule automobile, en particulier dans un dispositif de montage (18) d'un actionnement intérieur de porte d'une porte du véhicule automobile.

3. Procédé selon l'une des revendications 1 et 2,
dans lequel la connexion enfichable par câble Bowden (20) est maintenue de manière rotative dans la position finale sur une surface de butée (15).

4. Système de guidage (100) permettant de guider une connexion enfichable par câble Bowden (20) vers une position finale dans un composant de véhicule automobile d'un véhicule automobile, présentant une nervure d'appui (10) et une nervure de guidage (12),
dans lequel la nervure d'appui (10) présente une surface d'appui (14) qui est orientée au moins par sections selon un angle (α) par rapport à un axe vertical,
**caractérisé en ce que**
la nervure de guidage 12 présente une surface de guidage (13) qui est orientée perpendiculairement ou sensiblement perpendiculairement à la surface d'appui (14) de la nervure d'appui (10).

5. Système de guidage (100) selon la revendication 4,
dans lequel la nervure d'appui (10) et la nervure de guidage (12) sont réalisées en deux parties.

6. Système de guidage (100) selon l'une des revendications 4 ou 5,
dans lequel, dans la direction normale de la surface de guidage (13), la nervure d'appui (10) et la nervure de guidage (12) sont à distance l'une de l'autre d'une distance définie (d).

7. Système de guidage (100) selon l'une des revendications 4 à 6, dans lequel la surface d'appui (14) de la nervure d'appui (10) est réalisée plane et/ou bombée,
et/ou
dans lequel la surface de guidage (13) de la nervure de guidage (12) est réalisée plane.

8. Système de guidage (100) selon l'une des revendications 4 à 7, présentant en outre un dispositif de maintien qui est réalisé de telle sorte que la connexion enfichable par câble Bowden (20) est fixée de manière rotative dans une position finale.

9. Système de guidage (100) selon l'une des revendications 4 à 7, dans lequel la surface d'appui (14) de la nervure d'appui (10) est inclinée et/ou arrondie parallèlement à la surface de guidage (13).

10. Système de câble Bowden (200) pour un composant de véhicule automobile d'un véhicule automobile, présentant un système de guidage (100) selon l'une des revendications 4 à 9 et une connexion enfichable par câble Bowden (20),
**caractérisé en ce**
**que** la connexion enfichable par câble Bowden (20) peut être montée dans l'actionnement intérieur de porte à l'aide du système de guidage (100),
dans lequel un côté de la connexion enfichable par câble Bowden (20) s'appuie par complémentarité de forme, dans la position finale dans un composant de véhicule automobile d'un véhicule automobile, sur une surface de guidage (13) de la nervure de guidage (12) du système de guidage (100).
